# EUROPEAN PATENT SPECIFICATION

(11) **EP 2 651 642 B1**
(45) Date of publication and mention of the grant of the patent: **21.10.2015**
(21) Application number: 10807490.7
(22) Date of filing: 13.12.2010
(51) Int. Cl.: B32B 7/12, B32B 23/06, B32B 29/00, B65D 65/46

(54) **MULTILAYER BASED ON CELLULOSE AND DERIVATES THEREOF**
MULTILAYER AUF DER BASIS VON CELLULOSE UND DERIVATEN DARAUS
MULTICOUCHE À BASE DE CELLULOSE ET DE SES DÉRIVÉS

(43) Date of publication of application: 23.10.2013
(73) Proprietor: B.B.S. S.p.A., 41018 San Cesario Sul Panaro (Modena) (IT)
(72) Inventor: LELLI, Marco, I-40063 Monghidoro (Bologna) (IT); BALDUCCI, Giulia, I-47921 Rimini (IT); FORESTI, Elizabetta, I-55045 (IT); LECSI, Isidoro Georgio, I- 48014 Castel Bolognese (Ravenna) (IT); MARCHETTI, Marco, I-63010 Montefiore Dell'Aso (Ascoli Piceno) (IT); PIERINI, Filippo, I-61037 Mondolfo (Pesaro-Urbino) (IT); ROVERI, Norberto, I-40133 Bologna (IT); SANGIORGI, Sabrina, 41013 Castelfranco Emilia (Modena) (IT); SANGIORGI, Linda, I-41013 Castelfranco Emilia (Modena) (IT)
(74) Representative: Biggi, Cristina
(86) International application number: PCT/IT2010/000498
(87) International publication number: WO 2012/081041

(56) References cited:
- WO-A1-2008/104749
- GB-A- 1 389 287
- GB-A- 2 443 810
- IT-A1- MI20 032 140
- IT-A1- MI20 070 019
- US-A- 1 983 875
- DATABASE CA [Online] CHEMICAL ABSTRACTS SERVICE, COLUMBUS, OHIO, US; 8 October 2009 (2009-10-08), "Biodegradable material for packaging of foods especially salami and fresh meat cuts, and food packaging with such materials", XP000002657976, Database accession no. 151:357172 & IT 1 381 035 B1 (VED CARTA S.R.L.) 31 August 2011 (2011-08-31)
- DATABASE CA [Online] CHEMICAL ABSTRACTS SERVICE, COLUMBUS, OHIO, US; 20 May 2010 (2010-05-20), "Containers comprising cardboard and biodegradable plastic film", XP000002657977, retrieved from STN Database accession no. 152:504002 & IT 1 349 359 B1 (MARELLI ANNALISA) 20 November 2008 (2008-11-20)
- DATABASE WPI Week 199430 Thomson Scientific, London, GB; AN 1994-246697 XP000002657978, & JP 6 059712 B (FUJI SHASHIN FILM KK) 10 August 1994 (1994-08-10)
- DATABASE WPI Week 199409 Thomson Scientific, London, GB; AN 1994-071614 XP000002657979, & JP 6 024454 A (NIPPON TOKKYO KANRI CO LTD) 1 February 1994 (1994-02-01)

## Description

The present invention regards a multilayer based on cellulose and derivatives thereof, the process for production thereof and use thereof to contain foodstuffs.

As is well known, paper is a manufactured product made essentially from cellulose fibres of natural origin, which are felted together and interwoven. Two different types of raw materials are used to manufacture paper, namely, fibrous and non-fibrous raw materials. The fibrous raw materials most widely used derive mainly from different species of wood. The main natural wood fibre compounds are cellulose and cellulosic substances such as lignin. In order that the fibre can be used to produce paper, it must be isolated from the woody structure either by chemical removal of foreign constituents or mechanised destruction of the woody structure of the plant.

Another raw material for the production of paper consists in rags, that is to say cotton or linen textile scraps originating from textile and clothing industries. The fibres are cooked in rotary boilers with a lime, soda or caustic soda solution; they are subsequently washed and bleached with hypochlorites. Rags are used for the production of high quality paper, since the properties of the fibres making them up impart superior mechanical properties to the paper.

Other sources of cellulose in fibre form that can be used to produce paper are sugar cane, bamboo and straw.

In addition to fibrous raw materials, the industry uses large quantities of non-fibrous products for the manufacture of paper, mainly for the purpose of:
- increasing mechanical strength of the paper, for which various starches or carbohydrates can be used;
- modifying optical properties (brightness, opacity), for which purpose pigments with a high refraction index like kaolin, talc or calcium carbonate are added;

- producing a given effect on the absorbent properties, for which purpose use is made of urea-formaldehyde and melamine-formaldehyde resins, which form a cohesion system less sensitive to water;
- eliminating several problems encountered in the manufacture of paper, whose solution requires various retention, flocculation or drying agents.

Paper can be classified based on its use. In fact, the use of different pulps and added substances gives rise to different types of paper: on the market a large variety of paper products and numerous types of paper and cardboard are found. The latter two products are generally classified on the basis of their thickness and weight, expressed in grams per square metre. Accordingly three groups can be distinguished:
- paper as properly defined, with a thickness ranging from 0.02 mm to 0.3 mm and a weight of from 10 to 150 g/m²;
- paperboard, with a thickness ranging from 0.3 mm to 0.5 mm and a weight of from 150 to 400 g/m²;
- cardboard, with a thickness greater than 0.5 mm and a weight greater than 400 g/m².

The cellulose which forms paper plays an important role in the history of polymers, since it was used to produce some of the first artificial polymers, such as cellulose nitrate, cellulose acetate and viscose. Rayon and cellophane (regenerated cellulose) can be obtained from the latter.

Viscose is produced from cellulose, and in particular from tree wood pulp (but also from cotton, straw, etc.), treated with a caustic soda solution (NaOH). Carbon disulphide (CS₂) is then added to form cellulose xanthogenate, which is subsequently dissolved by means of a second treatment based on soda. What is obtained is a colloidal solution that is extruded. The filaments obtained through this process represent the viscose. Otherwise, these filaments can be made to pass into a sulphuric acid bath to obtain a film of regenerated cellulose (cellophane), or through small nozzles to obtain rayon.

More in detail, the steps for producing regenerated cellulose films are the following. First of all it is necessary to dissolve wood pulp or another cellulosic material in an alkaline carbon disulphide bath and then neutralise the solvent with an acid. In this manner a high viscosity paste, just called viscose, is obtained; which, when extruded through an extrusion die, takes on the form of a continuous film. Then a passage in a coagulating solution of sodium sulphate and sulphuric acid follows. The film is subsequently bleached, washed, impregnated with glycerine and dried. The film thus obtained, of variable thickness, is known as "cellophane".

At present 80% of regenerated cellulose sheets are used to wrap food products, resulting in a transparent packaging that renders the contents resistant to water and attack by microorganisms, guarantees protection against dust and external agents and moreover, thanks to its ductility, can be adapted to every shape. Furthermore, unlike competing products, such as polypropylene sheets, regenerated cellulose is biodegradable and does not pose any problems as far as its disposal as waste is concerned.

As is well known, in recent decades the growth in the manufacture of products derived from renewable natural sources is closely tied to the creation of new markets, reduction in production costs, recycling thereof and improvement in performance, which have made them competitive and convenient compared with conventional petroleum-derived materials. At present the vastest and most promising market for this type of products is that of food packaging, an area that would permit a strong expansion, but is also very competitive, with precise demands in terms of performance and costs. The materials used today for food packaging are glass, metal, paper, cardboard, and a large variety of plastic polymers derived from petroleum. There is also present a vast array of laminated bonded products that use a cardboard substrate and a surface lamination composed of synthetic polymer materials, among which the most widely used are: polyethylene (PE), oriented polypropylene (OPP). polyethylene terephthalate (PET).

With the exception of paper and cardboard, therefore, these are non-renewable raw materials destined to be depleted. In fact, though some can be regenerated, under food legislation they cannot be reused. The development of plastic materials derived from renewable sources, the so-called biopolymers, would allow this problem to be avoided, with the further advantage that these materials are biodegradable. Biopolymers for food packaging can be directly obtained from biological materials or from microorganisms, or else they can be obtained by classic chemical synthesis from renewable monomers. At present, the most important biodegradable biopolymers are polylactic acid (PLA) and polyhydroxyalkanoates (PHAs), in particular polyhydroxybutyrate (PHB). However, the high cost of producing them limits their use almost exclusively to high added-value sectors, such as, for example, the biomedical sector (for example in the preparation of suture threads) and pharmaceutical sector (controlled release of drugs). In the food packaging sector, where there is by contrast a demand for large quantities at a low price, it may be convenient to use biodegradable biopolymers derived from more economical renewable resources, such as, for example, agricultural products, which are also able to preserve organoleptic properties and avoid modifying structural properties of the food itself.

In the field of coupled composites, within the market of disposables, which includes trays, plates, tablecloths and cups, there exists a vast array of products, ranging from composites produced with a single material (plastic or another polymer material, or pure cellulose pulp), to composites produced by bonding together two different materials. The first is generally represented by a semi-rigid paperboard used as a substrate. Once printed, it is bonded with a surface polymer film, of variable thickness, which performs a barrier function against the migration of metals and colorants contained in the inks used during printing of the substrate itself. The problem encountered by this second category of listed products lies in the bonding together of two different materials, which makes the final product non-recyclable, either as a paper product or a plastic product. Therefore, as it cannot be recycled as separate waste, it is treated as unsorted waste.

There are numerous coupled composites present on the market which are made so as to permit correct contact between food and the paper material. The purpose of bonding a polymer layer to a sheet of paper material is to obtain an effective barrier between the printed paper sheet and the food itself. In this manner, the food is protected against any migration of toxic and/or health-threatening components, which could migrate into the food from the paper layer serving as the substrate. In fact, the paper substrate is often printed or treated on the surface with substances that are not suitable for food contact, such as, for example, pigments contained in printing inks, solvents used for manufacturing processes, and trace pollutants such as heavy metals present in recycled paper fibres deriving from pulp mills.

In other cases, the product made of paper bonded with polymers is prepared in order to produce food packaging for which particular mechanical properties are required. In this case, the purpose of coupling polymer phases that may have different nature and different properties is to achieve wrappings with superior mechanical properties, or with improved properties compared to a single sheet.

Generally speaking, the coupled products present on the market can be divided into different categories based on the number of layers making up the coupled article itself, the components of the layers or also the final use for which the resulting composite is intended.

For example, international patent application WO 2009/064052 regards a biodegradable composition usable for coupling with paper which comprises 10 to 85% by weight of polylactic acid (PLA), 10 to 75% by weight of a biodegradable aliphatic polyester resin and 0.05 to 5% by weight of a plasticizer. The coupling with paper can also be achieved without an adhesive, simply by using a suitable heat treatment and exploiting the thermoplastic properties of the polymers concerned.

In order to further improve barrier properties and mechanical properties of a laminate, there are also present on the market numerous multilayers made from three layers bonded together. In particular, there are known laminates made from a first layer of paper material, a second layer made of polymer material (generally polyethylene), and a third layer made of metal (generally aluminium). These layers can be bonded together by means of an adhesive material. They are made for the purpose of producing a laminate that is impermeable, and hence suitable for food contact and for preserving the foods contained inside it, as it maintains the moisture of the food itself. In this regard see for example international patent application WO 2010/069888.

In all of the cases mentioned above, the final manufactured article is however not biodegradable or compostable, since it has plastic polymer parts or metallic parts that do not degrade in contact with the environment. Furthermore, it should be noted that the above-described bonded products are composed of materials of different origin. The result is a product suitable for food contact, with apparent barrier properties and an ability to preserve the food contained therein, but none of the laminates listed above are completely made from materials having a common origin, as could be the case, for example, of a bonded article in which all of the films used have a plant origin. The result is a difficulty in placing these laminates in a recycling system, so that they are often classified as generic waste materials or composite plastic materials, and thus disposed of as unsorted waste.

There exist products on the market in which a film of regenerated cellulose is bonded on a paper material, whose use exclusively regards specific applications in particular fields. One of the uses of regenerated cellulose film bonded on paper relates to the manufacture of cigarette filters, as the properties of the paper - regenerated cellulose bonded article are particularly suitable for this type of use.

IT 1 381 035 B1 and IT 1 349 359 B1 disclose a multilayer material for food packaging comprising a cellulose-based substrate and one regenerated cellulose layer bonded to the substrate layer.

The United States patent application US 2010/0019021 describes an ovenable container for cooking or heating foods, which is formed from a laminate comprising one paperboard layer coated on both sides with a layer of regenerated cellulose or a polyester, e.g. oriented PET or amorphous PET. The resulting laminate provides an effective barrier action against the passage of oxygen, such as to enable correct preservation of foods in a freezer for a long time. In particular, the laminate can have the structure A/B/CB'/A', where A and A' are layers of heat-sealable regenerated cellulose and C is a paperboard layer, whereas B and B' are adhesive layers. The adhesive material must be able to withstand high temperatures without losing its adhesive properties, and can be for example a solvent-based polyurethane which requires the addition of a crosslinking agent. Specifically indicated is the use of a blend of TYCEL™ 7900 and TYCEL™ 7283, sold by the Liofol division of Henkel Corp. As stated in the safety datasheets, the product TYCEL™ 7900 contains, as products declared as harmful, 10 to 30% of ethyl acetate and 0.1 to 1% of methylenebis(phenylisocyanate), whereas the product TYCEL™ 7283 contains, as products declared as harmful, 70 to 90% of diethylene glycol (CAS No. 111-46-6) and 10 to 30% of a substituted silane.

The Applicant has faced the problem of providing a multilayer bonded article to be used in particular for the production of articles intended to come into contact with foodstuffs, in particular disposable containers (e.g. trays, cups or plates) or tablecloths, using a paper substrate upon which at least one film is applied made of a material that is capable of providing an effective barrier against substances unsuitable for food contact that may present in the paper, mainly due to printing or surface treatment processes, such as, for example, colorants, pigments contained in printing inks, solvents used for manufacturing processes, and trace pollutants such as heavy metals present in recycled paper fibres deriving from pulp mills. The Applicant has further set itself the objective of obtaining a manufactured article that is completely recyclable or compostable, without the use of adhesives or other products that could pollute the foods with which the article comes into contact.

The Applicant has now found that said objective and others better illustrated hereunder can be achieved by means of a multilayer material comprising a paper substrate upon which there is applied at least one regenerated cellulose layer, in which the bonding between the paper substrate and regenerated cellulose layer is achieved by means of a water-based adhesive which is a suspension or emulsion of a vinyl polymer and the regenerated cellulose layer comprises, as a surface coating, at least one layer of a material having the function of a barrier to the penetration of water. The resulting multilayer essentially consists only of materials based on cellulose or derivatives thereof, so it is suitable for manufacturing completely biodegradable disposable articles that can be collected separately as paper and recycled. The presence of least one layer coating the regenerated cellulose having the function of a barrier to the penetration of water enables coupling with the paper substrate to be achieved by means of water-based adhesives applied directly on the regenerated cellulose film, since the regenerated cellulose does not come into contact with the water present in said adhesive, which could compromise the mechanical properties of the regenerated cellulose, as the latter is substantially water soluble.

In a first aspect, the present invention thus regards a multilayer material which comprises: at least one layer of a cellulose-based substrate; at least one regenerated cellulose layer; wherein said at least one regenerated cellulose layer is bonded to said at least one cellulose layer by means of a water-based adhesive which is a suspension or emulsion of a vinyl polymer, and said at least one regenerated cellulose layer is coated, at least on the side in contact with the adhesive, with at least one layer of a material having the function of a barrier to the penetration of water.

According to another aspect, the present invention relates to a process for producing a multilayer material as described above, which comprises:
providing a regenerated cellulose layer coated at least on one side with at least one layer of a material having the function of a barrier to the penetration of water;
applying at least one layer of a water-based adhesive on said at least one side of the regenerated cellulose layer coated with at least one layer of material having the function of a barrier to the penetration of water;
at least partially removing the water present in the water-based adhesive;
assembling and pressing the adhesive layer with a cellulose-based substrate layer so as to achieve a bonding between the regenerated cellulose layer and the cellulose-based substrate.

According to a further aspect, the present invention relates to the use of a multilayer material as described above for the manufacture of articles intended to come into contact with foods, in particular food containers or tablecloths.

As regards the cellulose-based substrate layer, it can consist of paper, paperboard or cardboard of various types. Preferably the cellulose-based substrate layer has a weight per unit of surface area (grammage) of between 30 g/m² and 4000 g/m². This makes it possible to obtain a multilayer material having sufficient firmness for the majority of the envisaged uses, in particular for the manufacture of disposable cups, tablecloths and plates. Said grammage can be obtained with a single layer, or also by coupling, by means of gluing and pressing, several cellulose-based layers each having a relatively low grammage, for example ranging from 10 to 2000 g/m².

Taking into account the characteristics of the finished product, it is possible to use paperboards of different composition. These can thus be composed of pure virgin cellulose, recycled cellulose (originating from paper from pulp mills) or a mixture of the two. Preferably, recycled cellulose is used.

As regards the regenerated cellulose layer, this can be produced according to processes well known in the art, as summarily described in the introductory part of the present patent application.

Preferably, the regenerated cellulose layer has a thickness of 10 µm to 100 µm, most preferably 15 µm to 55 µm.

The regenerated cellulose layer has particular properties of transparency and gloss, so that the colours of any underprinted pattern will appear bright and vivid. Moreover, said layer possesses good properties as a barrier to gases and aromas and of resistance to oils and greases, and is thus in compliance with the applicable laws and regulations for the majority of applications associated with direct contact with foods.

As indicated above, the regenerated cellulose layer is coated, at least on one side intended to come into contact with the water-based adhesive, with at least one layer of a material having the function of a barrier to the penetration of water. Said material is preferably a mixture of paraffins in the form of wax. Alternatively, it can be a polyolefin material, in particular polyvinylidene chloride (PVdC). It should be noted that said barrier layer is in general extremely thin (a few microns), so that it does not in any way compromise recyclability of the final product, which is thus in compliance with all composting, incineration and recycling laws and regulations currently in force both in Europe and the USA. Besides preventing the penetration of water, said material can render the regenerated cellulose layer heat sealable, thus enabling the manufacture of articles involving the overlay and sealing of multilayer material without the use of additional adhesives.

Regenerated cellulose films coated with one or two layers of a material which forms a barrier to water are available on the market, for example under NatureFlex™ and CelloTherm™ trademarks of the Innovia Films Group.

As regards the water-based adhesive, this is selected from suspensions or emulsions of a vinyl polymer, in particular polyvinyl acetate, polyvinyl alcohol or polyvinylpyrrolidone. Preferably, the water-based adhesive has a dry residue of from 25 to 75% by weight, most preferably from 35% to 65% by weight, the remainder to 100% being made up by the aqueous phase. Preferably, the water-based adhesive has a neutral or slightly acidic pH value, generally a value ranging from 3.5 to 7.0, preferably from 4.0 to 6.5.

The quantity of water-based adhesive to be applied is preferably from 5 to 70 g/m², most preferably from 10 to 45 g/m².

The present invention will now be further illustrated with some working examples, which are provided solely for illustrative purposes and are not intended to limit the scope of the invention, with reference to the following appended figures, in which:
- Figure 1 is a schematic cross-sectional representation of a preferred embodiment of the multilayer material according to the present invention;
- Figure 2 is a schematic representation of an apparatus for carrying out the process according to the present invention.

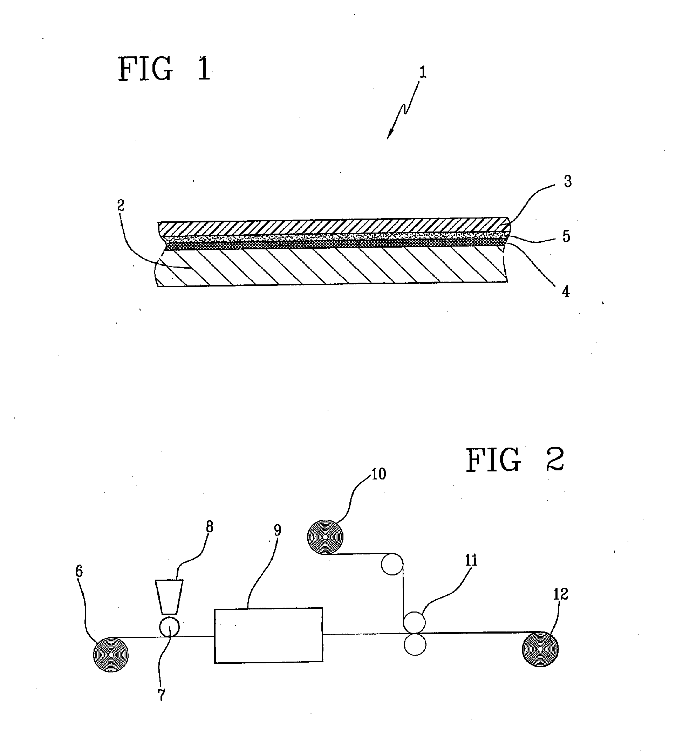

As regards Figure 1, it represents a cross-section of the multilayer material (1) according to a preferred embodiment. It comprises a cellulose-based substrate layer (2), upon which a regenerated cellulose layer (3) is applied, on the side intended to come into contact with the food. On the substrate layer (2) it is possible to apply another regenerated cellulose layer (not represented in the figure) on the side opposite to the one intended to come into contact with the food.

The coupling between the substrate layer (2) and the regenerated cellulose layer (3) is achieved with the layer (4) consisting of the water-based adhesive, as described above.

The regenerated cellulose layer (3) is coated, at least on the side in contact with the adhesive layer (4), with a layer (5) of a material having the function of a barrier to the penetration of water, as illustrated above.

With reference to Figure 2, which schematically illustrates an apparatus for carrying out the process according to the present invention, the regenerated cellulose layer (3), previously coated with a layer (5) having the function of a barrier to the penetration of water, is in general wound, in the form of a tape, on a reel (6) equipped with a winder provided with a tape tension control.

The depositing of the adhesive layer (4) on the regenerated cellulose layer (3) can be achieved for example by means of a roller (7) which is constantly in contact with a tank (8) containing the water-based adhesive described previously.

After the application of the adhesive, the film undergoes a pre-drying step in order to remove, at least partially, the water present in the water-based adhesive. Said pre-drying can be achieved, for example, by passing the film being processed through at least one oven (9) heated to a temperature of between 20°C and 220°C. Said pre-drying is necessary to facilitate the subsequent bonding step and to remove, at least partially, the water present, which would otherwise be difficult to eliminate from the finished multilayer.

Preferably, the pre-drying is achieved by passage through at least one oven, preferably from 1 to 3 ovens, at a temperature of 20°C to 220°C, most preferably 25°C to 200°C. The number of ovens can be varied based on the rate of production of the coupled article: in the case of high speeds the number of ovens can be increased so as to obtain a gradual pre-drying, in any event sufficient to obtain a film from which most of the water has been removed without generating wrinkles or other defects.

In a preferred embodiment, the pre-drying step is carried out by passage through three ovens arranged in series, the first heated to a temperature of 25°C to 150°C, the second heated to a temperature of 25°C to 200°C, and the third heated to a temperature of 25°C to 180°C.

The subsequent actual bonding step is then carried out by assembling the regenerated cellulose layer (3), coupled with the barrier layer (5) and coated with the adhesive layer (4), with the cellulose-based substrate layer (2), which is unwound from a reel (10), and submitting the assembly to pressing, for example by means of a cylinder press (11). The bonding is generally carried out at a temperature of 20°C to 200°C, most preferably 25°C to 120°C.

Subsequently the bonded article can be submitted, if necessary, to a final drying step (not represented in Figure 2) for the purpose of eliminating any water that has remained trapped. Said step can be carried out, for example, using jets of high temperature air, generally of between 70°C and 170°C.

The multilayer (1) is then wound on a collection reel (12).

At this point the multilayer material according to the present invention is ready for the subsequent processing necessary to achieve the desired final manufactured article. Said processing may include, for example, a punching step in order to obtain multilayer elements of the desired shape and size, which can then be assembled, if necessary after being submitted to a ridging process in order to form predetermined folding lines.

The processing may also include, depending on the article to be produced, a moulding step in order to form hollows (necessary for example to produce plates or trays) of depths varying from 1 mm to 100 mm, preferably 5 to 50 mm. The multilayer according to the present invention can also be used in flat form without any hollows, for example for the production of tablecloths.

### EXAMPLE.

A multilayer material according to the present invention was produced by bonding a paperboard having a weight of 320 g/m² with a film of regenerated cellulose coated with a layer having the function of a barrier to water and having a total thickness of 30 µm (NatureFlex™ NK manufactured by Innovia Films), using a water-based adhesive (40% polyvinyl acetate and 60% aqueous phase).

Based on the requirements of regulation 1935/2004EC, Dir. 2002/72/EC and Ministerial Decree 21/3/1973, suitability of said coupled multilayer for contact with foods was verified.

Said regulation provides that contact tests of the bonded article with different products must be carried out under controlled time and temperature conditions:
- Simulant A: distilled water or water of equivalent quality; this test determines the food contact compliance of the bonded article for all aqueous products with a pH greater than 4.5;
- Simulant B: aqueous solution of 3% w/v acetic acid; this test determines the food contact compliance of the bonded article for all aqueous products with a pH lower than 4.5;
- Simulant C: aqueous solution of 10% v/v ethanol; this test determines the food contact compliance of the bonded article for all products containing alcohol;
- Simulant D: rectified olive oil or other replacement simulants, such as 95 % v/v iso-octane or ethanol; this test determines the food contact compliance of the bonded article for all products containing fatty substances.

At the end of the defined period of food contact, the relevant calculations were made to assess the food contact compliance of the bonded article in respect of the simulant in question.

Regulation 1935/2004EC, Dir. 2002/72/EC and Ministerial Decree 21/3/1973 define the method to be used to determine any specific migration of colorants. After maintaining the bonded article in contact with the simulant for the times defined by the decree, the simulant itself is analysed by UV-Vis spectroscopy in a wavelength range from 400 to 800 nm. Any presence of absorption bands within the range investigated will be evidence of a transfer of colorants by the substrate paperboard layer, and hence an incomplete barrier provided by the regenerated cellulose bonded onto it.

The conditions of the tests performed on the bonded article are the following:
- Test with a duration of 1 hour at 70°C with simulants A, B and C
- Test with a duration of 2 hours at 70°C with simulants A, B and C
- Test with a duration of 1 hour at 60°C with simulant D (95% ethanol)
- Test with a duration of 2 hours at 60°C with simulant D (95% ethanol)
- Test with a duration of 30 minutes at 40°C with simulant D (iso-octane).

The overall migration tests conducted on the bonded article gave as a result a migration value of less than 1 mg/dm², well below the legal limit imposed by the previously defined decree, which sets the maximum migration value at 10 mg/dm².

The results as regards the specific migration of the colorants, determined by UV-Vis spectroscopy, likewise reveal no migration by the colorants used for printing the bonded paperboard.

## Claims

1. A multilayer material comprising: at least one cellulose-based substrate layer; at least one regenerated cellulose layer; wherein said at least one regenerated cellulose layer is bonded to said at least one cellulose layer by means of a water-based adhesive which is a suspension or emulsion of a vinyl polymer, in particular polyvinyl acetate, polyvinyl alcohol or polyvinylpyrrolidone, and said at least one regenerated cellulose layer is coated, at least on the side in contact with the adhesive, with at least one layer of a material having the function of a barrier to the penetration of water.

2. The multilayer material according to claim 1, wherein said at least one cellulose layer consists of paper, paperboard or cardboard having a weight per unit of surface area (grammage) of between 30 g/m² and 4000 g/m².

3. The multilayer material according to claim 1 or 2, wherein said at least one cellulose layer consists of recycled cellulose.

4. The multilayer material according to any of the preceding claims, wherein said at least one regenerated cellulose layer has a thickness of from 10 µm to 100 µm, preferably from 15 µm to 55 µm.

5. The multilayer material according to any of the preceding claims, wherein said material having the function of a barrier to the penetration of water is a blend of paraffins in the form of wax or a polyolefin material, in particular polyvinylidene chloride (PVdC).

6. The multilayer material according to any of the preceding claims, wherein said water-based adhesive has a dry residue of from 25% to 75% by weight, preferably from 35% to 65% by weight, the remainder to 100% being constituted by the aqueous phase.

7. The multilayer material according to any of the preceding claims, wherein said water-based adhesive has a neutral or slightly acidic pH value, generally a value ranging from 3.5 to 7.0, preferably from 4.0 to 6.5.

8. A process for producing a multilayer material according to any of the claims 1 to 7, comprising:
providing a regenerated cellulose layer coated at least on one side with at least one layer of a material having the function of a barrier to the penetration of water;
applying at least one layer of a water-based adhesive on said at least one side of the regenerated cellulose layer coated with at least one layer of material having the function of a barrier to the penetration of water;
at least partially removing the water present in the water-based adhesive;
assembling and pressing the adhesive layer with a cellulose-based substrate layer so as to achieve a bonding between the regenerated cellulose layer and the cellulose-based substrate.

9. The process according to claim 8, wherein the water-based adhesive is applied in a quantity of from 5 to 70 g/m², most preferably from 10 to 45 g/m².

10. The process according to claim 8 or 9, further comprising a final step of drying the bonded article obtained from the assembly and pressing step.

11. The process according to any of the claims 8 to 10, wherein the pre-drying step is achieved by passing the film being processed through at least one oven heated to a temperature of from 20°C to 220°C, preferably from 25°C to 200°C.

12. The process according to any of the claims 8 to 11, wherein the bonding step is carried out at a temperature of from 20°C to 200°C, preferably from 25°C to 120°C.

13. The process according to claim 10, wherein the final drying step is achieved by means of air jets at high temperature, generally from 70°C to 170°C.

14. Use of a multilayer material according to any of the claims 1 to 7 for the manufacture of articles intended to come into contact with foods, in particular food containers or tablecloths.

## Patentansprüche

1. Mehrschichtiges Material, umfassend mindestens ein cellulosebasiertes Substrat, mindestens eine regenerierte Celluloseschicht, wobei die mindestens eine regenerierte Celluloseschicht mit der mindestens einen Celluloseschicht mittels eines wasserbasierten Haftmittels verbunden ist, bei dem es sich um eine Suspension oder eine Emulsion eines Vinylpolymers handelt, insbesondere Polyvinylacetat, Polyvinylalkohol oder Polyvinylpyrrolidon, und wobei die mindestens eine regenerierte Celluloseschicht mindestens auf der Seite, die mit dem Haftmittel in Kontakt ist, mit mindestens einer Schicht eines Materials beschichtet ist, aufweisend die Funktion einer Barriere gegen das Eindringen von Wasser.

2. Mehrschichtiges Material nach Anspruch 1, wobei die mindestens eine Celluloseschicht aus Papier, Pappe oder Karton besteht, aufweisend ein Gewicht pro Oberflächeneinheit (Grammatur) zwischen 30 g/m² und 4000 g/m².

3. Mehrschichtiges Material nach Anspruch 1 oder 2, wobei die mindestens eine Celluloseschicht aus recycelter Cellulose besteht.

4. Mehrschichtiges Material nach einem der vorhergehenden Ansprüche, wobei die mindestens eine regenerierte Celluloseschicht eine Dicke von 10 µm bis 100 µm, vorzugsweise von 15 µm bis 55 µm, aufweist.

5. Mehrschichtiges Material nach einem der vorhergehenden Ansprüche, wobei das Material, das die Funktion einer Barriere gegen das Eindringen von Wasser aufweist, ein Gemisch aus Paraffinen in der Form von Wachs oder ein Polyolefinmaterial ist, insbesondere Polyvinylidenchlorid (PVdC).

6. Mehrschichtiges Material nach einem der vorhergehenden Ansprüche, wobei das wasserbasierte Haftmittel einen Trockenrückstand von 25 % bis 75 % Gewichtsanteil aufweist, vorzugsweise 35 % bis 65 % Gewichtsanteil, und der Restanteil bis 100 % aus der wässrigen Phase besteht.

7. Mehrschichtiges Material nach einem der vorhergehenden Ansprüche, wobei das wasserbasierte Haftmittel einen neutralen oder leicht sauren pH-Wert aufweist, im Allgemeinen einen Wert von 3,5 bis 7,0, vorzugsweise von 4,0 bis 6,5.

8. Verfahren zur Herstellung eines mehrschichtigen Materials nach einem der Ansprüche 1 bis 7, umfassend:
Bereitstellen einer regenerierten Celluloseschicht, die auf mindestens einer Seite mit mindestens einer Schicht eines Materials beschichtet ist, das die Funktion einer Barriere gegen das Eindringen von Wasser aufweist;
Anbringen von mindestens einer Schicht eines wasserbasierten Haftmittels an mindestens einer Seite der regenerierten Celluloseschicht, die mit mindestens einer Schicht eines Materials beschichtet ist, das die Funktion einer Barriere gegen das Eindringen von Wasser aufweist;
mindestens teilweises Beseitigen des im wasserbasierten Haftmittels enthaltenen Wassers;
Zusammenfügen und Pressen der Haftschicht mit einem cellulosebasierten Substrat, sodass eine Verbindung zwischen der regenerierten Celluloseschicht und dem cellulosebasierten Substrat hergestellt wird.

9. Verfahren nach Anspruch 8, wobei das wasserbasierte Haftmittel in einer Menge von 5 bis 70 g/m² angebracht wird, am besten von 10 bis 45 g/m².

10. Verfahren nach Anspruch 8 oder 9, zudem umfassend einen letzten Schritt des Trocknens des gebundenen Artikels, der durch den Schritt des Zusammenfügens und Pressens erhalten wird.

11. Verfahren nach einem der Ansprüche 8 bis 10, wobei der Vortrocknungsschritt erzielt wird, indem die zu verarbeitende Folie durch mindestens einen Ofen geschoben wird, der auf eine Temperatur von 20 °C bis 200 °C, vorzugsweise von 25 °C bis 120 °C, erhitzt ist.

12. Verfahren nach einem der Ansprüche 8 bis 11, wobei der Verbindungsschritt bei einer Temperatur von 20 °C bis 200 °C, vorzugsweise von 25 °C bis 120 °C, durchgeführt wird.

13. Verfahren nach Anspruch 10, wobei der abschließende Trocknungsschritt mittels Luftstrahlen bei hoher Temperatur, im Allgemeinen von 70 °C bis 170 °C, erzielt wird.

14. Verwendung eines mehrschichtigen Materials nach einem der Ansprüche 1 bis 7 zur Herstellung von Artikeln, die mit Nahrungsmittel in Kontakt kommen sollen, insbesondere Nahrungsmittelbehältern oder Tischwäsche.

## Revendications

1. Matériau multicouche comprenant : au moins une couche de substrat à base de cellulose ; au moins une couche de cellulose régénérée ; dans lequel ladite au moins une couche de cellulose régénérée est liée à ladite au moins une couche de cellulose par un adhésif à base d'eau qui est une suspension ou une émulsion d'un polymère vinylique, en particulier polyacétate de vinyle, alcool polyvinylique ou polyvinylpyrrolidone, et ladite au moins une couche de cellulose régénérée est revêtue, au moins sur le côté en contact avec l'adhésif, d'au moins une couche d'un matériau faisant fonction d'une barrière à la pénétration d'eau.

2. Matériau multicouche selon la revendication 1, dans lequel ladite au moins une couche de cellulose consiste en du papier, en du carton-pâte ou en du carton ayant une masse par unité de surface (grammage) entre 30 g/m² et 4000 g/m².

3. Matériau multicouche selon les revendications 1 ou 2, dans lequel ladite au moins une couche de cellulose consiste en de la cellulose recyclée.

4. Matériau multicouche selon l'une quelconque des revendications précédentes, dans lequel ladite au moins une couche de cellulose régénérée a une épaisseur allant de 10 µm à 100 µm, de préférence de 15 µm à 55 µm.

5. Matériau multicouche selon l'une quelconque des revendications précédentes, dans lequel ledit matériau faisant fonction d'une barrière à la pénétration d'eau est un mélange de paraffines sous la forme de cire ou un matériau polyoléfine, en particulier chlorure de polyvinylidène (PVdC).

6. Matériau multicouche selon l'une quelconque des revendications précédentes, dans lequel ledit adhésif à base d'eau a un résidu sec allant de 25% à 75% en poids, de préférence de 35% à 65% en poids, le reste à 100% étant constitué par la phase aqueuse.

7. Matériau multicouche selon l'une quelconque des revendications précédentes, dans lequel ledit adhésif à base d'eau a une valeur pH neutre ou légèrement acide, en général une valeur allant de 3,5 à 7,0, de préférence de 4,0 à 6,5.

8. Méthode pour fabriquer un matériau multicouche selon l'une quelconque des revendications 1 à 7, comprenant :
mise à disposition d'une couche de cellulose régénérée revêtue, au moins d'un côté, d'au moins une couche d'un matériau faisant fonction d'une barrière à la pénétration d'eau ;
application d'au moins une couche d'adhésif à base d'eau sur ledit au moins un côté de la couche de cellulose régénérée revêtu d'au moins une couche de matériau faisant fonction d'une barrière à la pénétration d'eau ;
élimination, au moins en partie, de l'eau contenue dans l'adhésif à base d'eau ;
assemblage et pressage de la couche d'adhésif avec une couche de susbtrat à base de cellulose de sorte à former une liaison entre la couche de cellulose régénérée et le substrat à base de cellulose.

9. Méthode selon la revendication 8, dans laquelle l'adhésif à base d'eau est appliqué dans une quantité allant de 5 à 70 g/m², de préférence de 10 à 45 g/m².

10. Méthode selon les revendications 8 ou 9, comprenant également une étape finale de séchage de l'article lié obtenu par l'étape d'assemblage et de pressage.

11. Méthode selon l'une quelconque des revendications 8 à 10, dans laquelle l'étape de pré-séchage consiste à faire passer le film traité dans au moins un four chauffé à une température allant de 20 °C à 200 °C, de préférence de 25 °C à 120 °C.

12. Méthode selon l'une quelconque des revendications 8 à 11, dans laquelle l'étape de liaison est menée à une température allant de 20 °C à 200 °C, de préférence de 25 °C à 120 °C.

13. Méthode selon la revendication 10, dans laquelle l'étape finale de séchage est menée par des jets d'air à haute température, en général de 70 °C à 170 °C.

14. Utilisation d'un matériau multicouche selon l'une quelconque des revendications 1 à 7 pour fabriquer des articles destinés à entrer en contact avec les aliments, en particulier des récipients alimentaires ou des nappes.
